# EUROPEAN PATENT APPLICATION

(11) **EP 4 822 648 A1**
(43) Date of publication of application: **14.10.2026**
(21) Application number: 24900222.1
(22) Date of filing: 19.08.2024
(51) Int. Cl.: G06T 13/40

(54) **METHOD AND PROGRAM FOR DETERMINING POSTURE OF SKELETON MODEL**

(30) Priority: 04.12.2023 JP 2023204925
(71) Applicant: CELSYS, Inc., Tokyo 160-0023 (JP)
(72) Inventor: KATSUMI Satoshi, Tokyo 160-0023 (JP)
(74) Representative: Hautier IP - MC/EP
(86) International application number: PCT/JP2024/029343
(87) International publication number: WO 2025/120925

(57) **Abstract**

[Object] Provided is a technique for more easily and accurately determining a posture of a bone of a character virtually representing a human or the like in a virtual space, or of a robot or the like existing in a real space.

[Solving Means] A posture determination method for determining the posture of a child bone in a skeleton model in which a parent bone and the child bone are connected by a joint, using multiple parameters that define a rotation of the child bone relative to the parent bone includes: making a determination on at least one of the multiple parameters, correcting the multiple parameters based on the determination, and determining the posture of the child bone using the multiple parameters corrected. The making the determination includes making a first determination on whether any of the multiple parameters exceeds a first limit being expressed as a limit in which at least one parameter affects a limit relating to the other two or more parameters. The correcting the multiple parameters includes, if the first determination results in a determination that the first limit is exceeded, correcting the multiple parameters using the first limit so that the multiple parameters are within a range of the first limit.

## Description

### [Technical Field]

The technique of the present disclosure relates to a method and program for determining a posture of a skeleton model.

### [Background Art]

There is a technique for creating poses and animations of characters in a virtual space on a computer screen or the like. In some cases, this technique uses a skeleton model composed of multiple bones connected by joints. Such a skeleton model can be used not only in a virtual space but also in a real space for target object control such as robot control.

For example, there is a technique for controlling the posture of a skeleton model with a parent bone and a child bone connected by a joint, the technique including: setting, as a focus point, a given point on a spherical plane with the joint set as a center point; setting, as a projection plane, a plane orthogonal to an axis connecting the center point and the focus point; and setting a range of motion of the joint on the projection plane (see, for example, Patent Literature 1).

In addition, there is a technique for controlling a motion of a child bone by limiting an angle range of the child bone relative to a parent bone at the joint, the technique including setting an angle range border circle defining the border of the angle range of the child bone on a spherical plane of a sphere with the joint centered, the angle range border circle passing through an intersection 1 between the spherical plane with the joint centered and the parent bone or an extension line of the parent bone. This technique uses a monopolar spherical coordinate system (µ, v) having the relationships µ = 2tan⁻¹(-z/(x+1)) and v = 2tan⁻¹(y/(x+1)) based on a three-dimensional orthogonal coordinate system (x, y, z) in which the joint is set as the origin and the direction from the intersection 1 to the origin is set as the positive direction of the x-axis (see, for example, Patent Literature 2).

However, in the prior art, it is difficult to determine the postures of bending or twisting of bones of many types of characters including, for example, human characters and others.

### [Citation List]

### [Patent Literature]

PTL 1: Japanese Patent Application Publication No. 2009-70340
PTL 2: Japanese Patent Application Publication No. 2012-164162

### [Summary of Invention]

### [Technical Problem]

The technique disclosed herein has an object to provide a technique capable of more easily and accurately determining a posture of a bone of a character that virtually represents a human or the like in a virtual space, or of a robot or the like that exists in a real space.

### [Solution to Problem]

The technique disclosed herein can provide a posture determination method for determining a posture of a child bone in a skeleton model in which a parent bone and the child bone are connected by a joint, using a plurality of parameters that define a rotation of the child bone relative to the parent bone. The method includes: making a determination on at least one parameter of the plurality of parameters; correcting the plurality of parameters based on the determination; and determining the posture of the child bone using the plurality of parameters corrected.

The making the determination includes making a first determination as to whether any of the plurality of parameters exceeds a first limit, the first limit expressed as a limit in which at least one parameter affects a limit relating to the other two or more parameters.

The correcting the plurality of parameters includes, if the first determination results in a determination that the first limit is exceeded, correcting the plurality of parameters using the first limit so that the plurality of parameters are within a range of the first limit.

The first limit may be a limit including a limit in which as at least one parameter increases or decreases, ranges of the other two or more parameters all decrease monotonically.

The plurality of parameters are three parameters.

In a three-dimensional space with the three parameters set as orthogonal coordinate axes, the first limit may be a limit defined by a shape including a solid shape whose cross-sectional area monotonically decreases along one direction.

The solid shape may be a cone.

The solid shape may be a part of a cone.

The solid shape may be a solid shape in which a shape of a base has an area and a shape of a top end is a line segment or curve segment existing at a position at a predetermined distance from the base in the one direction.

The solid shape may be a part of a solid shape in which a shape of a base has an area and a shape of a top end is a line segment or curve segment existing at a position at a predetermined distance from the base in the one direction.

A pose change in the skeleton model resulting from a change of any of the parameters in the one direction may be a pose change in a direction away from a preset initial pose of the skeleton model.

The first limit may include a shape of a combination of solid shapes whose cross-sectional areas monotonically decrease.

The method may further include, prior to the making the determination, executing a detection as to whether inverse kinematics is applied to a transformation of the skeleton model.

The making the determination may include, if the detection indicates that the inverse kinematics is not applied, making a second determination as to whether any of the plurality of parameters exceeds a second limit, the second limit encompassing the range of the first limit.

The correcting the plurality of parameters may further include, if the detection indicates that the inverse kinematics is not applied and if the second determination results in a determination that the second limit is exceeded, correcting the plurality of parameters using the second limit so that the plurality of parameters are within a range of the second limit.

The technique may be a program that causes a computer to execute the posture determination method. This program may be stored in a non-transitory storage medium.

### [Advantageous Effects of Invention]

According to the technique disclosed herein, it is possible to provide a technique capable of more easily and accurately determining a posture of a bone of a character virtually representing a human or the like in a virtual space, or of a robot or the like existing in a real space.

### [Brief Description of Drawings]

[Fig. 1] Figs. 1A and 1B are diagrams illustrating a character, a skeleton model, parent bones, child bones, and coordinate systems.
[Fig. 2] Figs. 2A and 2B are diagrams illustrating monopolar spherical coordinates (Fig. 2B is a diagram in which Fig. 2A is viewed from the opposite side).
[Fig. 3] Figs. 3A to 3C are diagrams showing that intersection lines of a group of planes and a unit spherical plane form a vertical grid.
[Fig. 4] Figs. 4A to 4C are diagrams showing that intersection lines of a group of planes and a unit spherical plane form a horizontal grid.
[Fig. 5] Figs. 5A and 5B are diagrams each illustrating a relationship between an orientation of a plane and φ or θ.
[Fig. 6] Fig. 6A is a diagram illustrating φ and µ of a point P on an xz plane. Fig. 6B is a diagram illustrating θ and v of a point P on an xy plane.
[Fig. 7] Fig. 7 is a diagram illustrating a movable area obtained by setting upper limits and lower limits for values µ and v.
[Fig. 8] Figs. 8A to 8D are diagrams illustrating a change in the posture of an entire arm including an upper arm (upper arms 800a to 800d) of a character 102.
[Fig. 9] Fig. 9 is a diagram illustrating an example of coordinate axes of an upper arm 124 and a collarbone 122.
[Fig. 10] Figs. 10A to 10C are diagrams illustrating coordinate axes X0, Y0, Z0, coordinate axes X1, Y1, Z1, and twisting λ 890d of an upper arm.
[Fig. 11] Figs. 11A and 11B are diagrams each illustrating an example in which a parameter range in a three-dimensional space with parameters s, t, and u set as orthogonal coordinate axes is limited by using the technique of the present invention.
[Fig. 12] Fig. 12A is a diagram in which a point 1202 indicates a state where parameters take values outside a limit range during an inverse kinematics calculation, an operator's joint manipulation, or the like. Fig. 12B is a diagram schematically illustrating an example of how the correction of the present invention changes a transition of parameters as the parameters, if not corrected, would transition from a point 1251 to a point 1255.
[Fig. 13] Figs. 13A and 13B are diagrams illustrating modifications of a solid of motion range that limits a parameter range in a three-dimensional space with parameters s, t, and u set as orthogonal coordinate axes.
[Fig. 14] Figs. 14A to 14H each illustrate an example of a shape of a solid of motion range.
[Fig. 15] Figs. 15A to 15C are diagrams of a solid of motion range in an stu space viewed from a direction parallel to a base.
[Fig. 16] Figs. 16A and 16B are diagrams each illustrating an oval outline shape of a cross section.
[Fig. 17] Fig. 17 is a diagram illustrating an elliptical outline shape of a cross section.
[Fig. 18] Fig. 18 is a flowchart presenting a method in an embodiment.
[Fig. 19] Fig. 19 is a flowchart presenting a method of controlling a posture when inverse kinematics is applied and when inverse kinematics is not applied.
[Fig. 20] Fig. 20 is a hardware configuration diagram in an embodiment.

### [Description of Embodiments]

Prior to detailed description of an embodiment of the disclosed technique, description will be given of a monopolar coordinate system usable in the technique of the present disclosure for determining the posture of a skeleton model with bones and joints combined. An example of how to determine a posture in the case of using this monopolar coordinate system will be presented. Note that the monopolar coordinate system is just an example, and the technique of the present disclosure is not intended to prohibit use of a coordinate system other than the monopolar coordinate system.

### [1. Monopolar Spherical Coordinates]

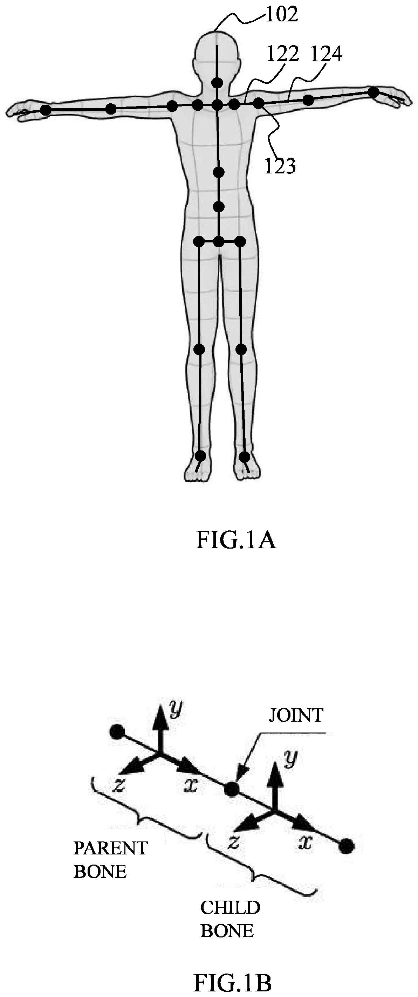

As an example, assume that a skeleton model in Fig. 1A is used. This skeleton model is a model of a human skeleton.

In a character 102, there is a skeleton model including a collarbone 122, a shoulder joint 123, and a humerus 124. For example, there is a certain limit on a range of motion of the arm at the shoulder joint. The model assuming a pose in which the arm is bent at an angle (bending, twisting) beyond this limit would be far from a model of a real human. In order to create a skeleton model assuming a natural pose as a human, it is necessary to impose a certain limit on the range of motion of the bone at the shoulder joint, for example.

To express the orientation of each bone in the skeleton model (Fig. 1A) as described above, a coordinate system is defined for each bone as illustrated in Fig. 1B.

A unit spherical plane (a spherical plane with a radius of 1) with the joint centered is created and an intersection of an x axis (in the portion where x > 0) of a child bone and the spherical plane is denoted as P. Then, a bending state at the joint can be expressed by the position of the point P on the spherical plane. As a method for expressing a joint rotation (bending and twisting), there is a method using three-axis rotation angles (Euler angles). For example, an x-axis rotation, a y-axis rotation, and a z-axis rotation are applied in this order based on the coordinate system of the parent bone and a relationship between the rotation angle around each axis and the position of the point P is focused on. In this case, the z-axis rotation angle corresponds to longitude and the y-axis rotation angle corresponds to latitude. Therefore, when y-axis rotation angles and z-axis rotation angles are arranged at equally intervals on the spherical plane to create a grid, the resultant grid is a shape similar to the longitudes and latitudes of a globe.

The two points corresponding to the North Pole and South Pole are singular points in the angle expression and are difficult to handle, so the number of singular points is desirably as small as possible.

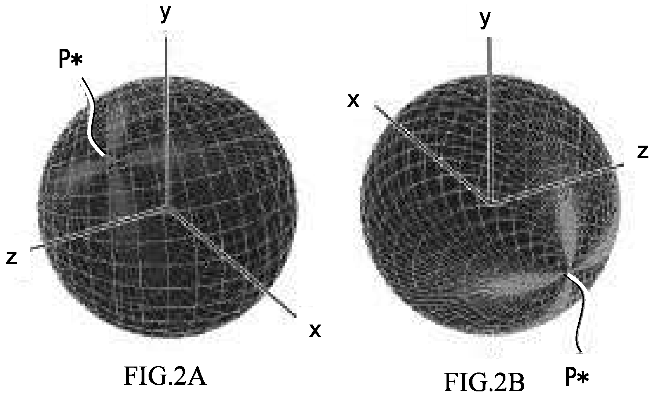

In contrast to this, the method disclosed in Patent Literature 2 is known as a method for reducing the number of singular points to one. The features of this method represented by a grid on a spherical plane are as illustrated in Figs. 2A and 2B. This grid can be considered as a coordinate system created on a spherical plane. Because there is one pole (singular point), this coordinate system will be referred to as "monopolar spherical coordinates" herein.

Regarding the monopolar spherical coordinates, the following item will be described below.

· A method of limiting a joint angle using monopolar spherical coordinates

### [2. Structure of Monopolar Spherical Coordinate System]

Generally, when a two-dimensional coordinate system is marked with degrees, a grid is formed. In the following description, the term "grid" may be used for convenience in some cases, but what is meant by this term is not just a grid but also includes the meaning of a coordinate system.

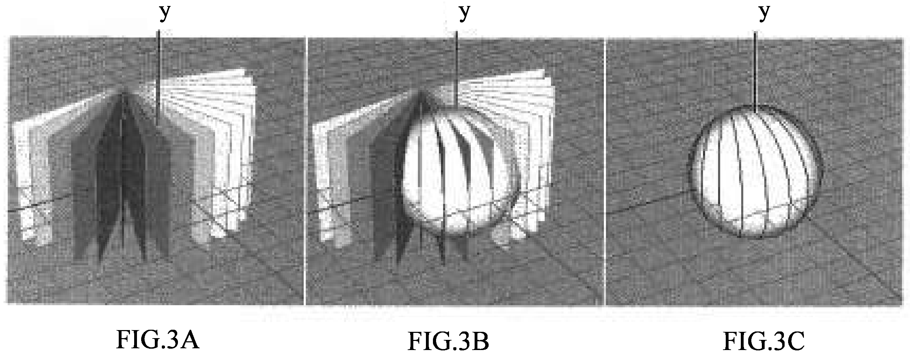

Figs. 3A to 3C are diagrams for explaining vertical lines of a grid on a unit spherical plane.

A point at coordinates (-1, 0, 0) is denoted by P* and this point is called a "pole". Here, ly denotes a line passing through the pole P* and being parallel to the y axis. As illustrated in Fig. 3A, a group of planes at equal angular intervals, each including ly, are prepared. As illustrated in Fig. 3B, a unit spherical plane is superimposed on this group of planes. As illustrated in Fig. 3C, the intersections of this group of planes and the unit spherical plane are taken as vertical lines of a grid on the unit spherical plane.

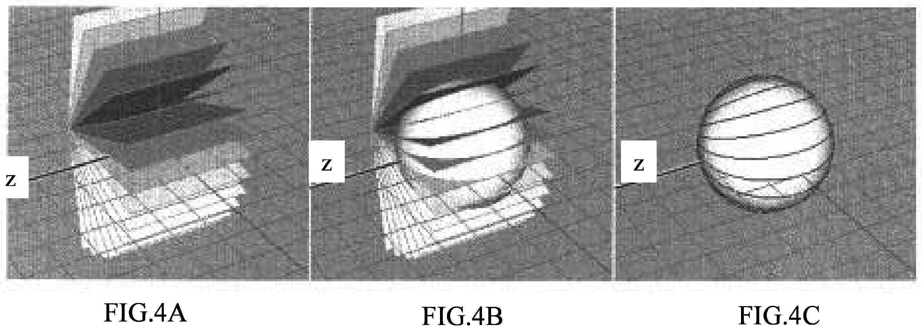

Figs. 4A to 4C are diagrams for explaining horizontal lines of a grid on a unit spherical plane.

Similarly, as illustrated in Fig. 4A, lz denotes a line passing through the pole P* and being parallel to the z axis, and a group of planes at equal angular intervals, each including lz, are prepared. As illustrated in Fig. 4B, a unit spherical plane is superimposed on this group of planes. As illustrated in Fig. 4C, the intersections of this group of planes and the unit spherical plane are taken as horizontal lines of a grid.

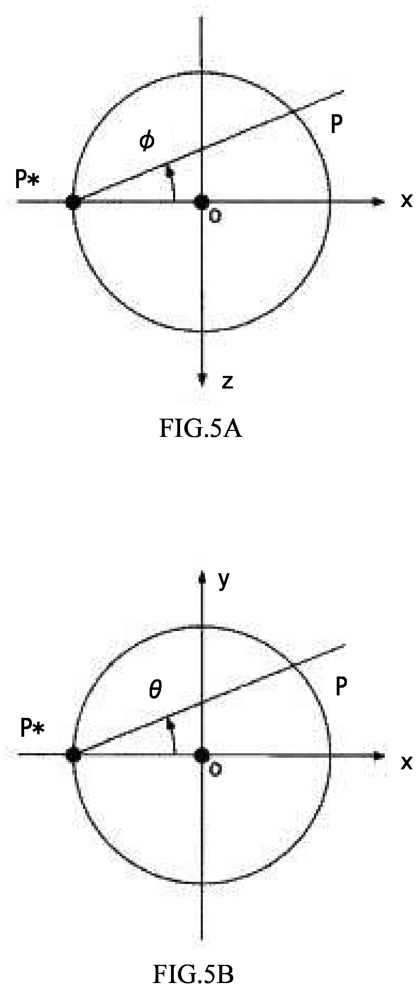

As illustrated in Figs. 5A and 5B, the orientation of the plane including the line ly is expressed by an angle φ, and the orientation of the plane including the line lz is expressed by an angle θ. The signs of φ and θ are positive in the directions illustrated in Figs. 5A and 5B. The position of a point P on the spherical plane is determined as the intersection of three planes: a plane determined by φ, a plane determined by θ, and the unit spherical plane. A position on the spherical plane is expressed by using µ and v, where µ ≡ 2φ and v ≡ 2θ.

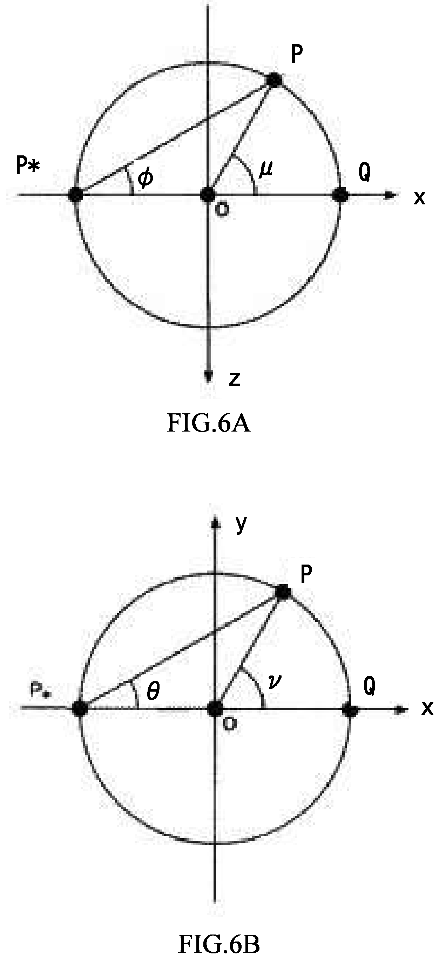

Using µ and v instead of directly using φ and θ has the following advantages. Here, a case where a point P is on the xz plane (i.e., v = 0) as illustrated in Fig. 6A is considered. The orientation of the child bone is OP. Q denotes the point at coordinates (1, 0, 0).$∠ OP * P = ∠ OPP * = φ$ $∠ OP * P + ∠ OPP * = ∠ QOP$ $∴ ∠ QOP = 2 φ = μ$

Therefore, µ is the rotation angle of the child bone around the y axis when v = 0. Similarly, as illustrated in Fig. 6B, when a point P is on the xy plane (i.e., µ = 0), v is the rotation angle of the child bone around the z axis.

In this way, using µ and v makes it easy to intuitively grasp a state of rotation (the orientation of the child bone). For example, Fig. 2 illustrates the grid created with µ and v values at intervals of 10°, and it can be seen that the grid on the xy plane and xz plane is composed of lines at equal intervals of 10° on the circumferences.

### [3. Monopolar Spherical Coordinates and Orientation of Child Bone]

A unit vector representing the orientation of the child bone is denoted by v ≡ (x, y, z), and this is expressed as (µ, v) in the monopolar spherical coordinates. The relationship between the two is expressed by the following Formulas (v represents a vector herein): [Formula 1] $\begin{matrix}μ = 2 {tan}^{- 1} \frac{- z}{x + 1} & \left(1\right) \\ ν = 2 {tan}^{- 1} \frac{y}{x + 1} & \left(2\right) \\ x = T - 1 & \left(3\right) \\ y = TN & \left(4\right) \\ z = - TM & \left(5\right)\end{matrix}$ where M, N, and T are as follows:
[Formula 2] $\begin{matrix}M ≡ tan \frac{μ}{2} , N ≡ tan \frac{ν}{2} & \left(6\right) \\ T ≡ \frac{2}{{M}^{2} + {N}^{2} + 1} & \left(7\right)\end{matrix}$

Hereinafter, specific control of angles (bending and twisting) will be described in detail.

### [4. Setting of Movable Area]

### [Angle Limit Specified by Rectangular Area]

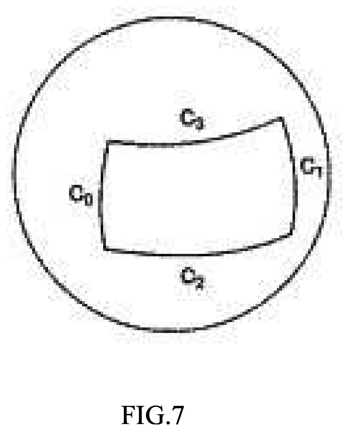

With upper and lower limits set for values µ and v, the movable area can be set as illustrated in Fig. 7.

### [Embodiment]

In the above method, the orientation of the child bone is defined in the monopolar coordinate system (µ, v). In addition, a twisting angle of the child bone, i.e., the angle of rotation around the longitudinal direction (x axis) of the child bone is denoted by A. Here, the bending and twisting at a joint are collectively referred to as a joint rotation.

In the following description, the left upper arm, the left hand, and so on will be simply referred to as the upper arm, the hand, and so on, and the notation of left and right will be omitted.

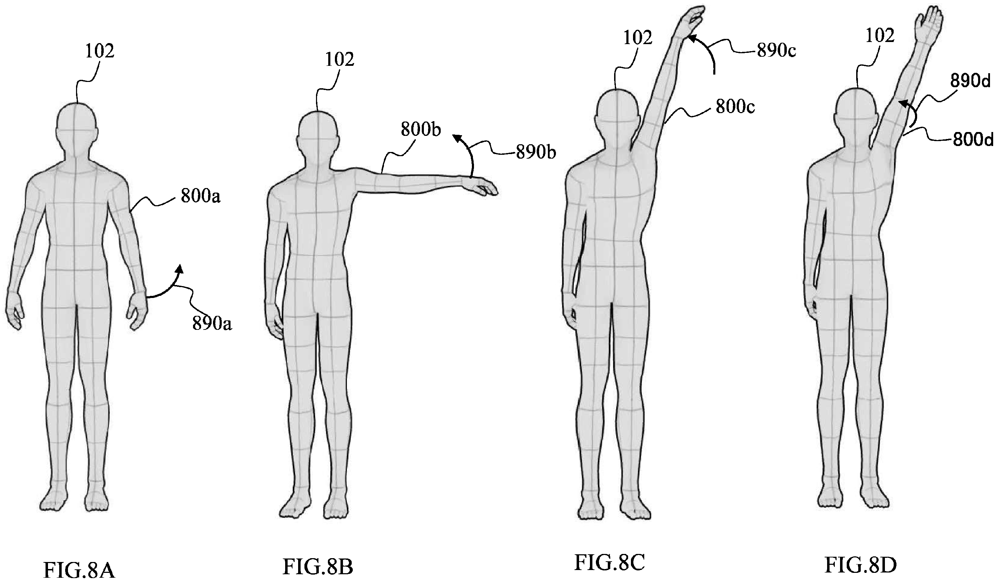

Figs. 8A to 8D are diagrams illustrating a change in the posture of an entire arm including the upper arm (upper arms 800a to 800d) of a character 102. A skeleton model as illustrated in Fig. 1A is set in the character 102.

Here, assume that a distal part beyond the shoulder joint is moved with the position and posture of the collarbone fixed. In addition, assume that the twisting of the wrist (twisting of the hand relative to the forearm) is not changed. In Fig. 8A, the wrist on the distal side from the upper arm 800a of the character 102 is picked by a pointer such as a mouse operated by an operator, and is about to be swung up in a direction of arrow 890a.

In Fig. 8B, the entire arm, including the upper arm 800b, is stretched out substantially horizontally using a method such as inverse kinematics. Here, the inverse kinematics is a well-known technique for determining the posture of each bone in a skeleton model, and therefore description of its operation and method is omitted herein. Then, the wrist located on the distal side from the upper arm 800b is continuously picked by the pointer such as the mouse operated by the operator, and is about to be swung up in a direction of arrow 890b.

In Fig. 8C, as a result of continuously picking and moving the wrist in a direction of arrow 890c by the pointer such as the mouse operated by the operator, the entire arm including the upper arm 800c is stretched substantially upward using the method such as inverse kinematics.

In the process from Fig. 8A to Fig. 8C, there occurs almost no twisting of the upper arm about the longitudinal axis of the upper arm (hereinafter simply referred to as twisting), illustrated as the upper arm 800a to the upper arm 800c. As a result, the palm of the hand in Fig. 8C is facing outward from the body.

Fig. 8D illustrates a state after the upper arm 800d connecting to the shoulder joint is twisted in a direction of arrow 890d in response to an instruction from the operator.

As the posture of the upper arm 800c in Fig. 8C and the posture of the upper arm 800d in Fig. 8D are compared, for a posture of a person naturally swinging up his/her entire hand, the posture of the upper arm 800d in Fig. 8D is more suitable than the posture of the upper arm 800c in Fig. 8C.

Therefore, the state of the character 102 after the wrist is picked from the state of the character 102 in Fig. 8A and the entire arm is swung up using the method such as inverse kinematics is more preferably the state of the character 102 in Fig. 8D than the state of the character 102 in Fig. 8C.

However, since the posture in Fig. 8C is a posture that a human can assume, it is difficult to avoid the posture in Fig. 8C by simply limiting the joint angle. Therefore, in the present invention, in conjunction with, for example, swinging up the upper arm (i.e., changing the rotation angle in the up-down direction), the ranges of motion in the twisting rotation and front-back rotation of the upper arm are intentionally narrowed, so that the posture is changed not to the posture in Fig. 8C but to the posture in Fig. 8D.

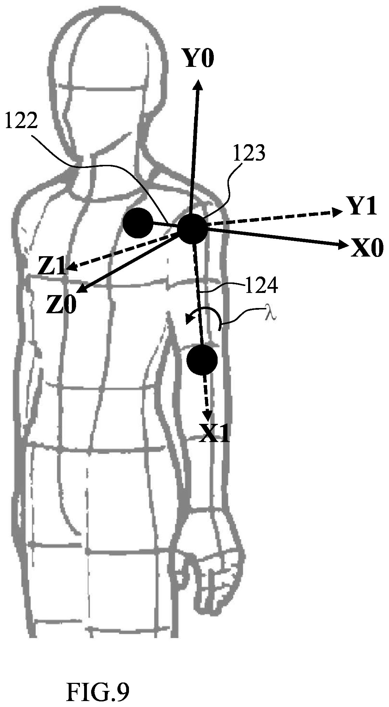

Fig. 9 is a diagram illustrating an example of coordinate axes for an upper arm 124 and a collarbone 122.

The collarbone 122 as a parent bone and the upper arm 124 as a child bone are connected by the shoulder joint 123. The origin of the coordinate axes X0, Y0, and Z0 of the collarbone is at the base of the collarbone. The origin of the coordinate axes X1, Y1, and Z1 of the upper arm is at the shoulder joint 123. The origin of the upper arm exists on the coordinate axis X0 of the collarbone. The coordinate axis X1 of the upper arm extends in the direction from the shoulder to the elbow. To facilitate understanding of explanation of the rotation, the coordinate axes of the collarbone are shown superimposed on the shoulder joint 123. The bending of the upper arm 124 relative to the collarbone is expressed by the aforementioned monopolar coordinate system (µ, v). The twisting of the upper arm 124 relative to the collarbone is expressed by a rotation angle λ about the axis X1.

Therefore, the posture of the upper arm 124 can be defined by three parameters (λ, µ, v).

The above-described posture of the upper arm 124 is the definition using the monopolar coordinate system in the three-dimensional space. Instead, other parameters that can define a bone posture (Euler angles, quaternions) can be used. In general, the posture of a bone in the three-dimensional space can be defined by three parameters.

The following description will be given using (s, t, u) as these three parameters. For example, the parameters (s, t, u) are associated with the above-described monopolar coordinate system as follows: $s = λ$ $t = μ$ $u = ν$

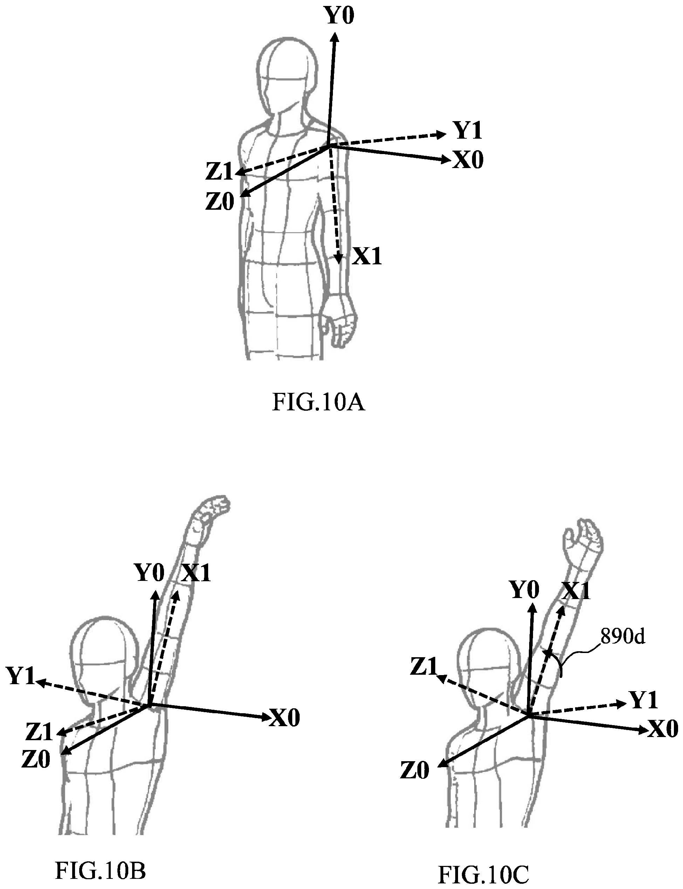

Figs. 10A to 10C are diagrams illustrating a coordinate system XYZ, an axis X1, and twisting λ 890d of the upper arm.

In the embodiment described below, a method will be described in which the character's posture in Fig. 10A is changed to the character's posture in Fig. 10C with the wrist lifted up in response to an instruction from an operator or the like.

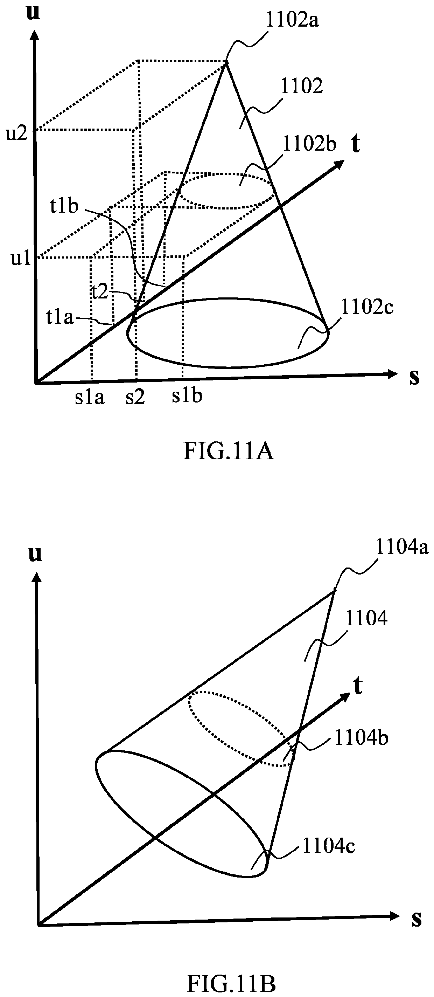

Figs. 11A and 11B are diagrams illustrating examples in which a parameter range in a three-dimensional space in which the parameters s, t, and u are set as orthogonal coordinate axes is limited by using the technique of the present invention.

A solid of motion range 1102 is a solid representing a range of motion (allowable range) of the parameters and the surface and internal area of the solid of motion range 1102 are the range of motion.

In the illustrated example, the solid of motion range 1102 is set to have a base 1102c and a top end 1102a while the area of a cross section 1102b parallel to the base of the solid of motion range 1102 decreases from the base 1102c to the top end 1102a. In this case, the larger the parameter u, the narrower the range in which the other two parameters s and t satisfy the limits.

For example, if u is the parameter v (i.e., a parameter indicating the bending of the upper arm 124 around the Z0 axis) and the parameter u increases as the hand is raised in the order of Figs. 8A, 8B, and 8D, then in accordance with this motion, the range of the parameter µ (i.e., the rotation of the upper arm 124 around the Y0 axis) corresponding to the value of the parameter t is limited to a predetermined range, and the range of the parameter λ (i.e., the twisting of the upper arm 124 around the X1 axis) corresponding to the value of the parameter s is limited to a predetermined range.

In this way, by setting the shape of the solid of motion range 1102 to limit the value of the parameter s for the twisting of the upper arm 124 so that the palm faces in front when the arm is swung up, the state with the arm swung up can be made to appear more natural.

In Fig. 11A, the inside of the cross section 1102b indicates the limit range of the parameters in the course of swinging up the upper arm 124. In this case, the value of the parameter u is u1. The limit range that the parameter s can take at that moment is from s1a to s1b. In addition, the limit range that the parameter t can take at that moment is from t1a to t1b.

The top end 1102a indicates the limit range of the parameters in a state with the upper arm 124 fully swung up. In this case, the value of the parameter u is u2. The value that the parameter s can take at that moment is s2. In addition, the value that the parameter t can take at that moment is t2. In this case, s2 is the value of the twisting of the upper arm with the palm facing in front in the state with the hand swung up.

Note that, if the posture in Fig. 8A with the arm lowered is set as an initial pose, then an increasing direction of the parameter u can be said to be a pose change of raising the arm, that is, a pose change in a direction away from the initial pose.

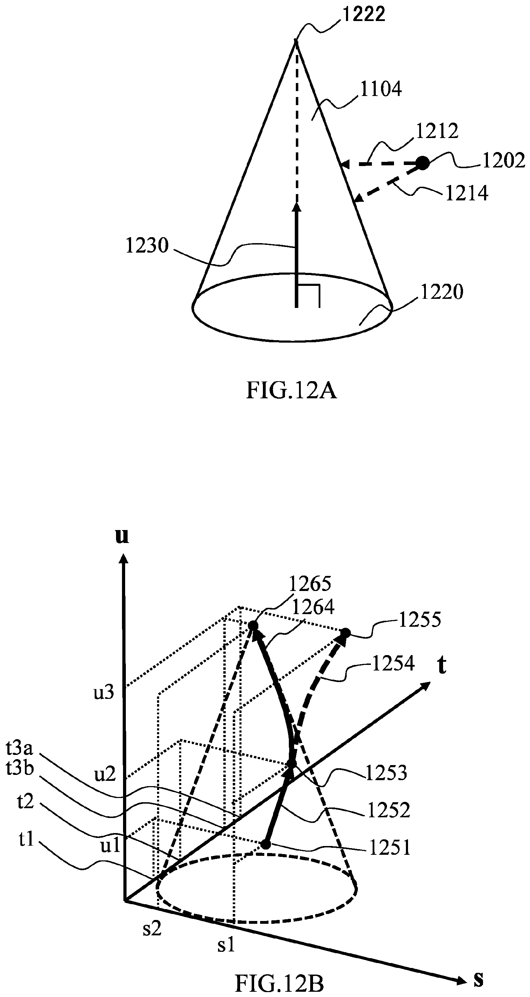

Figs. 12A and 12B are diagrams each illustrating an example of a correction of parameters in a case where the parameters are outside a limit range.

In Fig. 12A, a point 1202 indicates a state where the parameters take values outside the limit range during an inverse kinematics calculation, an operator's joint manipulation, or the like. In this case, the point 1202 can be corrected by being moved in a direction of arrow 1212 or arrow 1214 so that the parameters are on the surface or inside of a solid of motion range 1104.

The movement according to the arrow 1214 is a movement to a point that is located on the surface of the solid of motion range 1104 and is closest to the point 1202. The movement according to the arrow 1212 is a movement to a point on the outline, the point obtained as an intersection of the solid of motion range 1104 with a plane including the point 1202 and being parallel to the base 1220 and while being closest to the point 1202. Details of this correction method will be described later.

Fig. 12B is a diagram schematically illustrating an example of how the correction of the present invention changes a transition of parameters as the parameters, if not corrected, would transition from a point 1251 to a point 1255.

A transition curve segment from the point 1251 to the point 1255 intersects with the surface of the solid of motion range 1104 at a point 1253. A curve segment 1252 representing a transition from the point 1251 to the point 1253 is located inside the solid of motion range 1104. A curve segment 1254 representing a transition from the point 1253 to the point 1255 is located outside the solid of motion range 1104.

The curve segment 1252 is not subjected to the correction because it is located within the solid of motion range 1104 and therefore within the limit range. The parameter u transitions from u1 to u2, the parameter s remains at s1, and the parameter t transitions from t1 to t2. In this case, since s remains at the value s1, the twisting of the upper arm is kept unchanged.

The curve segment 1254 is subjected to the correction because it is outside the solid of motion range 1104, and therefore outside the limit range. The curve segment 1254 is corrected to a curve segment 1264 on the surface of the solid of motion range 1104.

Both before and after the correction, the parameter u transitions from u2 to u3. In the transition before the correction (curve segment 1254), the parameter s remains at s1 and the parameter t transitions from t2 to t3a. In the transition after the correction (curve segment 1264), the parameter s transitions from s1 to s2 and the parameter t transitions from t2 to t3b. In this way, the correction changes the transition of the parameters s and t. As the parameter s transitions from s1 to s2, the upper arm 124 is twisted and the palm faces in front.

In this way, when the posture of the skeleton model is changed using the technique of the present invention, the posture of the skeleton model changes to a more natural posture.

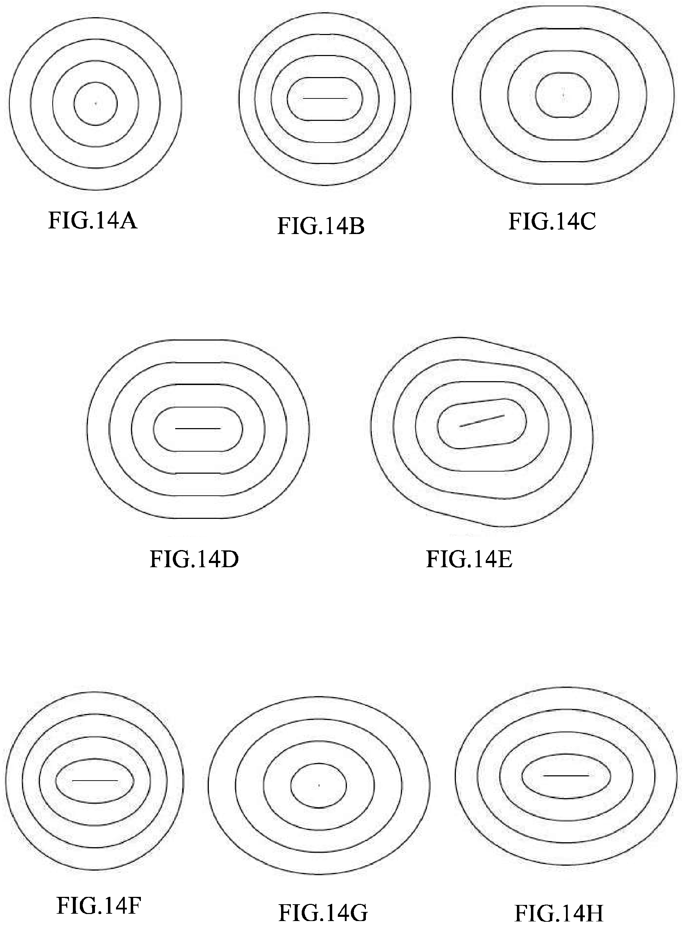

Figs. 14A to 14H each illustrate an example of a shape of a solid of motion range, in which with a direction perpendicular to the base of the solid of motion range set as a height direction, the shape of the solid of motion range is illustrated using contour lines.

A solid of motion range illustrated in Fig. 14A is a circular cone. In the solid of motion range, the top end is a point and the base is a circle. All the contour lines are circles.

In a solid of motion range illustrated in Fig. 14B, the top end is a line segment and the base is a circle. The contour lines other than the top end and the base are ovals. As in this example, the shape of the solid of motion range may be a shape other than a cone.

In a solid of motion range illustrated in Fig. 14C, the top end is a point and the base is an oval. The contour lines other than the top end are ovals.

In a solid of motion range illustrated in Fig. 14D, the top end is a line segment and the base is an oval. The contour lines other than the top end are ovals.

In a solid of motion range illustrated in Fig. 14E, the top end is a line segment and the base is an oval. The contour lines other than the top end are ovals. As in this example, the top end and the base may be misaligned. In other words, the shape obtained by vertically projecting the top end shape onto the base does not have to be located at the center of the base.

In a solid of motion range illustrated in Fig. 14F, the top end is a line segment and the base is a circle. The contour lines other than the top end and the base are ellipses.

In a solid of motion range illustrated in Fig. 14G, the top end is a point and the base is an ellipse. The contour lines other than the top end are ellipses.

In a solid of motion range illustrated in Fig. 14H, the top end is a line segment and the base is an ellipse. The contour lines other than the top end are ellipses.

In addition, the shape of the top end may be a curve segment.

Alternatively, a solid of motion range may have a shape, for example, obtained by removing a portion above a certain height from any of the shapes illustrated in Figs. 14A to 14H. For example, a shape obtained by removing a portion above a certain height from the shape illustrated in Fig. 14A is a truncated cone. A truncated cone may also be used as the shape of the solid of motion range.

### [Correction Method]

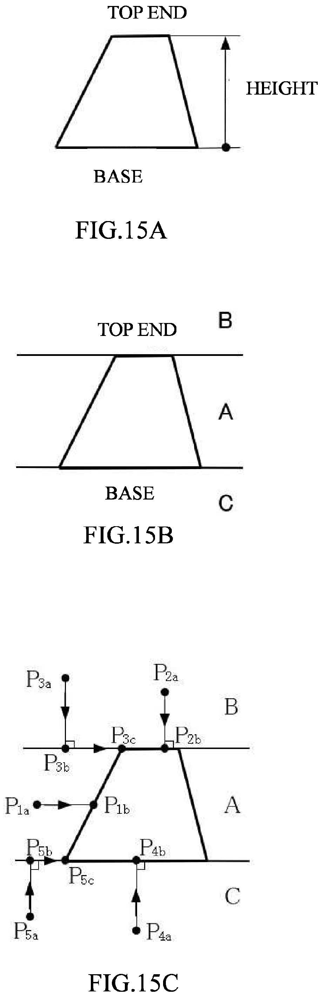

Figs. 15A to 15C are diagrams of a solid of motion range in the stu space viewed from a direction parallel to the base. As illustrated in Fig. 15B, a space outside the solid of motion range is divided into three areas A, B, and C. The border between the area A and the area C is a plane that includes the base. The border between the area A and the area B is a plane that includes the top end and is parallel to the base. The parameters (s, t, u) expressing a joint angle correspond to the coordinates at a point in the stu space.

If the position of the point corresponding to the joint angle is outside the solid of motion range, the joint angle is corrected by moving the position of the point to the surface of the solid of motion range. The correction method differs depending on which of the areas A, B, and C the position of a point before correction is located in, as illustrated in Fig. 15C.

If a point before correction is located in the area A like a point P1a, the point is moved on a plane that includes the point P1a and is parallel to the base to the closest point P1b on the surface of the solid of motion range. The point P1b is set as the position after correction. Details of the movement of a point on a plane will be described later.

If a point before correction is located in the area B, the point is first vertically projected onto a border plane between the areas A and B (i.e., a plane that includes the top end of the solid of motion range and is parallel to the base). If the position of the projected point is on the surface of the solid of motion range, the position is set as the position after correction (for example, a point P2a is moved to a point P2b). If the position of the projected point is outside the solid of motion range, the point is moved on the projection plane to the closest point on the surface of the solid of motion range, and the position of the closest point is set as the position after correction (for example, a point P3a is moved to a point P3c).

If a point before correction is located in the area C, the point is first vertically projected onto a plane including the base of the solid of motion range. If the position of the projected point is on the surface of the solid of motion range, the position is set as the position after correction (for example, a point P4a is moved to a point P4b). If the position of the projected point is outside the solid of motion range, the point is moved on the projection plane to the closest point on the surface of the solid of motion range, and the position of the closest point is set as the position after correction (for example, a point P5a is moved to a point P5c).

The point is moved on the plane parallel to the base (or the plane including the base) in accordance with the following method. As an example, each case will be described in which the cross section of a solid of motion range taken along the plane has an oval or elliptical outline shape. Here, this outline shape is the same as one of the contour lines of the solid of motion range.

### [Case with Oval Outline shape of Cross Section]

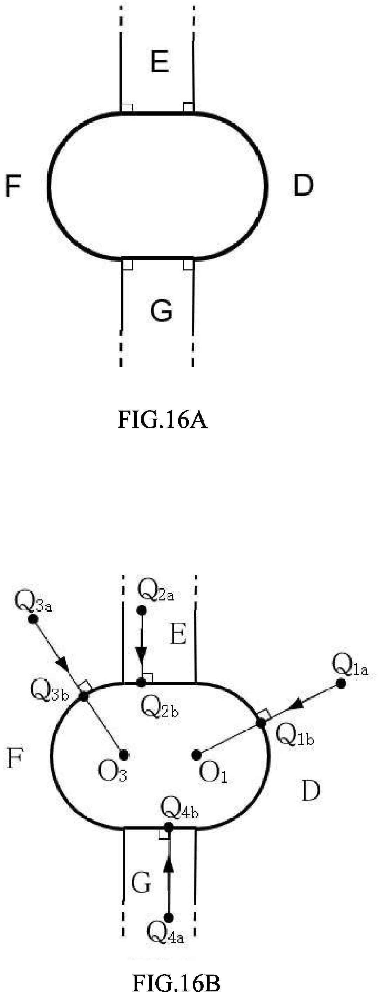

Figs. 16A and 16B are diagrams illustrating an oval outline shape of a cross section. An area outside the outline is divided into four areas D to G. Each of borders between the areas is a perpendicular line drawn from an endpoint of a straight line portion of the oval shape. Fig. 16B illustrates an example of moving points located outside the oval shape to the closest points on the outline.

If a point before correction is located in the area D like a point Q1a, the closest point Q1b on the outline is located on an arc portion of the outline. When O1 denotes the center of the arc, the point Q1b is the intersection of a straight line Q1aO1 and the arc. The point Q1b is set as the position after correction.

If a point before correction is located in the area E like a point Q2a, the closest point Q2b on the outline is located on a straight line portion of the outline. The point Q2b is the foot of a perpendicular line dropped from the point Q2a to the straight line. The point Q2b is set as the position after correction.

If a point before correction is located in the area F like a point Q3a, a point Q3b is set as the position after correction by using the same method as in the case where a point is located in the area D.

If a point before correction is located in the area G like a point Q4a, a point Q4b is set as the position after correction by using the same method as in the case where a point is located in the area E.

### [Case with Elliptical Outline Shape]

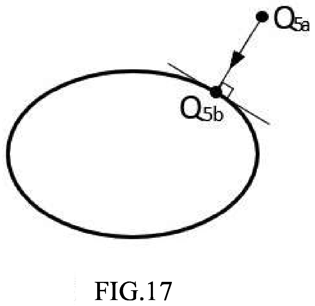

Fig. 17 illustrates an elliptical outline shape of a cross section. A point before correction is assumed to be Q5a. The closest point Q5b on the outline is set as the position after correction. Compared to the case with the oval outline shape, the elliptical outline shape is advantageous in that case distinction is unnecessary. The closest point Q5b can be found by solving a quartic equation.

The above description is given by focusing only on twisting of the upper arm for the sake of simplicity and clarity. However, in general, when a posture of a skeleton model is changed using inverse kinematics with a wrist picked, an appropriate limit is also imposed on twisting of each of bones other than the upper arm according to the bending of the bone, so that the posture of the character 102 changes to a more natural posture.

It goes without saying that the technique of the present invention is also applicable to bending and twisting of any bone other than the upper arm.

Furthermore, application of the above joint angle limitation method may be limited to cases where inverse kinematics is used. To a case where inverse kinematics is not used, in other words, a case where a rotation angle of a joint is manipulated by a manipulator or the like, an angle limitation different from the above joint angle limitation method may be applied.

The limit imposed by the above-mentioned joint angle limitation method may be defined as a first limit, a second limit that encompasses the first limit may be prepared in advance, and then the first limit may be applied when inverse kinematics is used, whereas the second limit may be applied when inverse kinematics is not used.

Fig. 11B is a diagram illustrating an example of a three-dimensional space with the parameters s, t, and u set as orthogonal coordinate axes, in which a solid of motion range 1104 is oriented obliquely and the limit range is defined by this solid of motion range. A base 1104c is not parallel to any of the coordinate axes, and the height direction (the direction perpendicular to the base) is not parallel to any of the coordinate axes either.

In this way, it is possible to limit the range of the parameters by using a solid of motion range oriented obliquely. In this case, for example, the correction according to 1212 in Fig. 12A is made within the plane of a cross section 1104b parallel to the base 1104c. For example, if the coordinate axes of the collarbone are set obliquely and a rotation of the arm raising up involves changing both parameters t and u, it is advisable to use such a solid of motion range oriented obliquely.

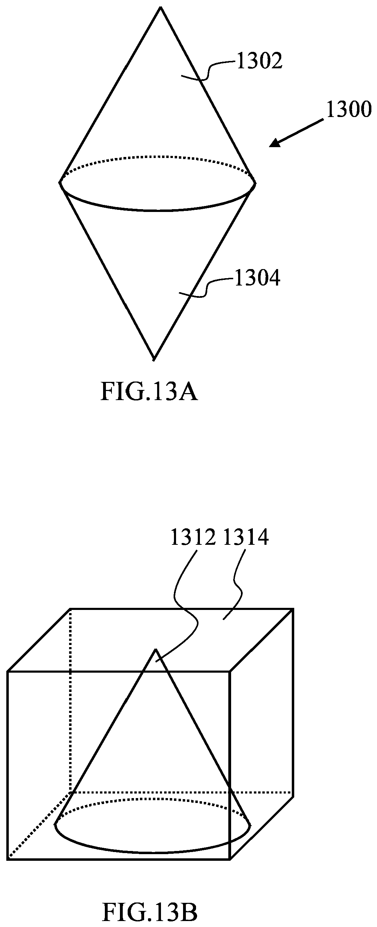

Figs. 13A and 13B are diagrams each illustrating a modification of a solid of motion range that limits a parameter range in a three-dimensional space with the parameters s, t, and u set as the orthogonal coordinate axes.

Fig. 13A is a diagram illustrating a solid of motion range 1300 in which a cone 1302 and a cone 1304 are combined and share a common base. In this way, the solid of motion range is not limited to a cone. For example, such a geometric limit 1300 may be applied to a rotation of a thigh bone for a motion of swinging up a leg back and forth.

Fig. 13B is a diagram illustrating a relationship between a cone 1312, which is a solid of motion range in the case where inverse kinematics is used, and a rectangular parallelepiped 1314, which is a solid of motion range in the case where inverse kinematics is not used. In general, limits imposed on bending and twisting of each of bones in a human body tend to be narrower when multiple joints are moved simultaneously than when only one specific joint is moved. The inverse kinematics is often applied to the former case. For this reason, the second limit applied when inverse kinematics is not used naturally allows a wider range than that of the first limit applied when inverse kinematics is used. In other words, it is natural that the second limit is a limit that encompasses the first limit. Fig. 13B is a diagram showing this relationship.

For example, in the case of a character having a structure in which multiple objects are connected by joints like a robot character, the technique of the present invention may be applied with the objects themselves regarded as the bones in the present invention.

A quaternion may be used as parameters expressing a rotation of a joint. The real part of the quaternion is denoted by qr, and the imaginary parts are denoted by qx, qy, and qz. The quaternion expressing a rotation has the following features: ${qr}^{2} + {qx}^{2} + {qy}^{2} + {qz}^{2} = 1 ;$ 1) and $\left(qr, qx, qy, qz\right) and \left(-qr, -qx, -qy, -qz\right)$ 2) represent the same posture.

If the expression where the real part is non-negative is always used out of the above two expressions in 2), qr can be obtained from qx, qy, and qz by calculation of qr = (qx² + qy² + qz²)^{1/2}. Therefore, a rotation can be expressed by the three parameters qx, qy, and qz. The technique of the present invention may be applied by using qx, qy, and qz as the parameters expressing a rotation.

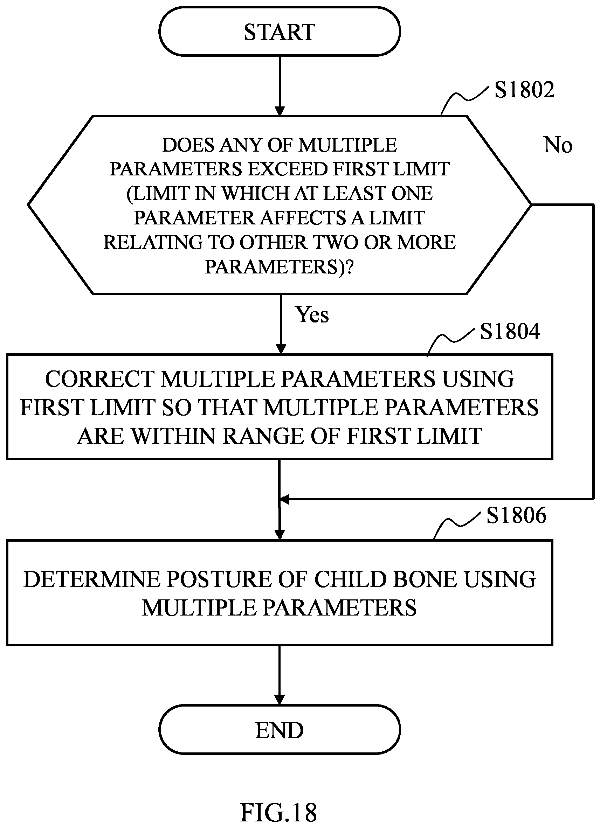

Fig. 18 is a flowchart presenting a method in an embodiment.

[S1802] It is checked whether any of the multiple parameters exceeds a first limit (a limit in which at least one parameter affects a limit relating to the other two or more parameters). If the check result is affirmative (Yes), the process proceeds to step S1804. If the check result is negative (No), the process proceeds to step S1806.

[S1804] The multiple parameters are corrected using the first limit so that the multiple parameters are within the range of the first limit.

[S1806] The posture of the child bone is determined using the multiple parameters.

In this way, a more natural posture of the skeleton model can be obtained.

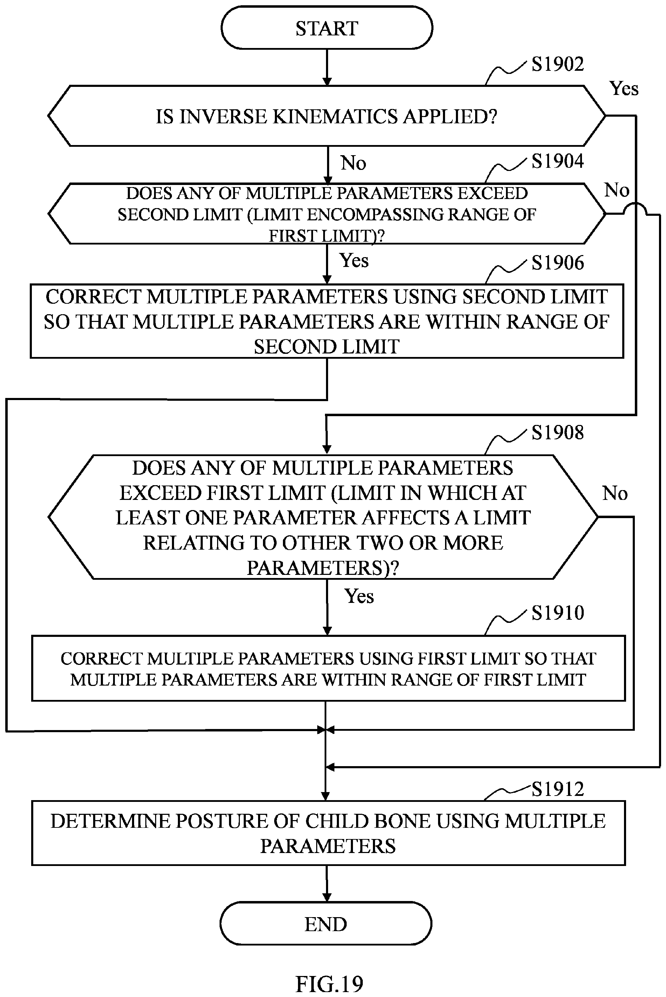

Fig. 19 is a flowchart presenting a method of controlling a posture when inverse kinematics is applied and when inverse kinematics is not applied.

[S1902] It is checked whether inverse kinematics is applied. If the check result is affirmative (Yes), the process proceeds to S1908. If the check result is negative (No), the process proceeds to S1904.

[S1904] It is checked whether any of the multiple parameters exceeds a second limit (a limit that encompasses the range of the first limit). If the check result is affirmative (Yes), the process proceeds to S1906. If the check result is negative (No), the process proceeds to S1912.

[S1906] The multiple parameters are corrected using the second limit so that the multiple parameters are within the range of the second limit.

[S1908] It is checked whether any of the multiple parameters exceeds a first limit (a limit in which at least one parameter affects a limit relating to the other two or more parameters). If the check result is affirmative (Yes), the process proceeds to S1910. If the check result is negative (No), the process proceeds to S1912.

[S1910] The multiple parameters are corrected using the first limit so that the multiple parameters are within the range of the first limit.

[S1912] The posture of the child bone is determined using the multiple parameters.

In this way, the posture of the skeleton model can be appropriately set by using a limit different depending on the case where inverse kinematics is applied or the case where inverse kinematics is not applied.

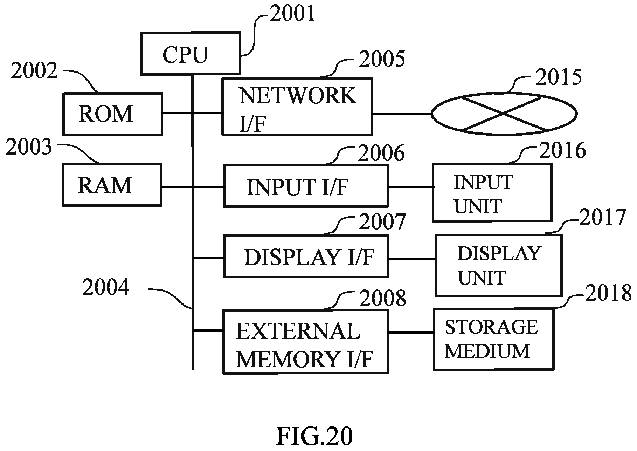

Fig. 20 is a hardware configuration diagram in an embodiment.

A hardware configuration in the embodiment includes a CPU 2001, a ROM 2002 in which a program of the present embodiment and data may be stored, a RAM 2003, a network interface 2005, an input interface 2006, a display interface 2007, and an external memory interface 2008. These pieces of hardware are connected to each other by a bus 2004.

The network interface 2005 is connected to a network 2015. The network 2015 may be a wired LAN, a wireless LAN, the Internet, a telephone network, or the like. The input interface 2006 is connected to an input unit 2016. The display interface 2007 is connected to a display unit 2017. The display unit 2017 may include multiple display devices. The external memory interface 2008 is connected to a storage medium 2018. The storage medium 2018 may be a RAM, a ROM, a CD-ROM, a DVD-ROM, a hard disk, a memory card, a USB memory, or the like.

The procedures in the method or program in the illustrated embodiments may be reordered unless a contradiction occurs. Also, unless a contradiction occurs, an illustrated single procedure may be executed multiple times at different time points. Moreover, multiple procedures may be executed concurrently unless a contradiction occurs. Furthermore, not all the procedures are essential, and some procedure(s) may be excluded or skipped unless a contradiction occurs.

The above matters also similarly apply to constituent elements of the method set forth in claims. Specifically, the constituent elements can be reordered unless a contradiction occurs. In addition, multiple constituent elements may be executed concurrently unless a contradiction occurs. Then, such executions of the constituent elements also fall within the technical scope specified in claims.

Each of the procedures may be executed by an operating system or hardware. The program may be stored in a non-transitory medium and distributed in that state.

The program and the method achieving the foregoing embodiments may be executed by a computer having the hardware configuration illustrated in Fig. 20. In other words, a program in an embodiment may be implemented as a method to be executed by the computer.

The program may be stored in the storage medium 2018, the ROM 2002, or the RAM 2003.

Each embodiment may be implemented as a hardware apparatus in which the program is installed.

### [Reference Signs List]

- 2001: CPU
- 2002: ROM
- 2003: RAM
- 2004: bus
- 2005: network interface
- 2006: input interface
- 2007: display interface
- 2008: external memory interface
- 2015: network
- 2016: input unit
- 2017: display unit
- 2018: storage medium

## Claims

1. A posture determination method for determining a posture of a child bone in a skeleton model in which a parent bone and the child bone are connected by a joint, using a plurality of parameters that define a rotation of the child bone relative to the parent bone, comprising:
making a determination on at least one parameter of the plurality of parameters;
correcting the plurality of parameters based on the determination; and
determining the posture of the child bone using the plurality of parameters corrected, wherein
the making the determination includes making a first determination as to whether any of the plurality of parameters exceeds a first limit, the first limit expressed as a limit in which at least one parameter affects a limit relating to the other two or more parameters, and
the correcting the plurality of parameters includes, if the first determination results in a determination that the first limit is exceeded, correcting the plurality of parameters using the first limit so that the plurality of parameters are within a range of the first limit.

2. The posture determination method according to claim 1, wherein the first limit is a limit including a limit in which as at least one parameter increases or decreases, ranges of the other two or more parameters all decrease monotonically.

3. The posture determination method according to claim 1, wherein
the plurality of parameters are three parameters,
in a three-dimensional space with the three parameters set as orthogonal coordinate axes, the first limit is a limit defined by a shape including a solid shape whose cross-sectional area monotonically decreases along one direction.

4. The posture determination method according to claim 3, wherein the solid shape is a cone.

5. The posture determination method according to claim 3, wherein the solid shape is a part of a cone.

6. The posture determination method according to claim 3, wherein the solid shape is a solid shape in which a shape of a base has an area and a shape of a top end is a line segment or curve segment existing at a position at a predetermined distance from the base in the one direction.

7. The posture determination method according to claim 3, wherein the solid shape is a part of a solid shape in which a shape of a base has an area and a shape of a top end is a line segment or curve segment existing at a position at a predetermined distance from the base in the one direction.

8. The posture determination method according to claim 3, wherein a pose change in the skeleton model resulting from a change of any of the parameters in the one direction is a pose change in a direction away from a preset initial pose of the skeleton model.

9. The posture determination method according to claim 3, wherein the first limit includes a shape of a combination of solid shapes whose cross-sectional areas monotonically decrease.

10. The posture determination method according to claim 1, further comprising, prior to the making the determination, executing a detection as to whether inverse kinematics is applied to a transformation of the skeleton model, wherein
the making the determination includes, if the detection indicates that the inverse kinematics is not applied, making a second determination as to whether any of the plurality of parameters exceeds a second limit, the second limit encompassing the range of the first limit, and
the correcting the plurality of parameters further includes, if the detection indicates that the inverse kinematics is not applied and if the second determination results in a determination that the second limit is exceeded, correcting the plurality of parameters using the second limit so that the plurality of parameters are within a range of the second limit.

11. A program that causes a computer to execute the posture determination method according to any one of claims 1 to 10.
